# EUROPEAN PATENT APPLICATION

(11) **EP 4 549 599 A1**
(43) Date of publication of application: **07.05.2025**
(21) Application number: 23863082.6
(22) Date of filing: 31.08.2023
(51) Int. Cl.: C21D 9/46, C21D 1/26, C21D 1/76, C21D 9/56, C22C 38/00, C22C 38/06, C22C 38/60, C23C 2/06, C23C 2/16

(54) **HIGH-STRENGTH HOT-DIP-GALVANIZED STEEL SHEET AND PRODUCTION METHOD FOR SAME**

(30) Priority: 07.09.2022 JP 2022142523
(71) Applicant: JFE Steel Corporation, Tokyo 100-0011 (JP)
(72) Inventor: KOBA Masaki, Tokyo 100-0011 (JP); HOSHINO Katsuya, Tokyo 100-0011 (JP); MAKIMIZU Yoichi, Tokyo 100-0011 (JP); HIRASHIMA Takuya, Tokyo 100-0011 (JP); WATANABE Maiko, Tokyo 100-0011 (JP); TAKEDA Gentaro, Tokyo 100-0011 (JP); NAITO Kyoko, Tokyo 100-0011 (JP); OZAWA Yuichi, Tokyo 100-0011 (JP)
(74) Representative: Grünecker Patent- und Rechtsanwälte PartG mbB
(86) International application number: PCT/JP2023/031755
(87) International publication number: WO 2024/053544

(57) **Abstract**

An object of the present invention is to provide a high-strength hot-dip galvanized steel sheet which uses a steel sheet containing Si and Mn as a base material and which has excellent coating appearance and exhibits excellent coating adhesion during strong forming, and to provide a method for producing the steel sheet.

A method for producing a high-strength hot-dip galvanized steel sheet including a steel sheet having a chemical composition containing predetermined components, with the mass ratio of Si to Mn (Si/Mn) being 0.25 or more, and the balance being Fe and incidental impurities, and a zinc coating layer formed on the surface of the steel sheet with a coating weight of not less than 20 g/m² and not more than 120 g/m² per one surface of the steel sheet, the method including subjecting the steel sheet to annealing and hot-dip galvanization in a continuous hot-dip galvanizing facility, wherein the maximum temperature T of the steel sheet in an annealing furnace is 900°C or less, wherein the dew point X of an atmosphere in the furnace in the steel sheet temperature range of 700°C to T°C is controlled to be not less than a temperature calculated by the following inequality (1), and wherein the atmosphere in the furnace contains hydrogen in an amount of not less than 3.0 vol % and not more than 20.0 vol %, and at least one of SO₂ in an amount of not less than 0.1 vol ppm and not more than 3.0 vol ppm and HCl in an amount of not less than 0.5 vol ppm and not more than 10.0 vol ppm, with the balance of the atmosphere being nitrogen and incidental impurities: Dew point X ≥ (-50 + [Si% by mass] × (T - 600)/30 + [Mn% by mass] × (T - 600)/25)

## Description

### Technical Field

The present invention relates to a high-strength galvanized steel sheet which has excellent formability, the importance of which increases as the tensile strength increases, and which can be advantageously used for building materials or automotive crash-resistant parts, and to a method for producing the same.

### Background Art

In these days when there is a strong demand for improvements in the crashworthiness and fuel efficiency of automobiles, steel sheets as materials for automotive parts are becoming increasingly higher in strength. In addition, as automobiles are becoming more and more widespread on a global scale, automobiles are used for a variety of purposes in a wide variety of regions and climates. Steel sheets as materials for automotive parts are therefore required to have a high rust resistance.

In general, a hot-dip galvanized steel sheet is produced by using a thin steel sheet, obtained by hot rolling or cold rolling of a slab, as a base material, and subjecting the base steel sheet to recrystallization annealing and hot-dip galvanization in an annealing furnace of a continuous galvanizing line (hereinafter referred to as CGL). In the case of a galvannealed steel sheet, it is produced by subjecting the steel sheet after hot-dip galvanization to an alloying treatment.

The annealing furnace of a CGL includes furnaces such as a direct fired furnace (DFF), a non-oxidizing furnace (NOF), and a radiant tube furnace (RTF). In recent years, construction of CGLs equipped with an all- radiant tube-type furnace, in which all the furnaces are radiant tube furnaces, has been increasing because such a CGL is easy to operate and unlikely to produce pick-up defects, and therefore can produce high-quality coated steel sheets at low cost. On the other hand, in the case of a steel sheet containing an easily oxidizable element such as Si or Mn, it is preferred to oxidize the steel sheet under appropriate conditions just prior to reduction annealing. Unlike an annealing furnace in which a direct fired furnace or a non-oxidizing furnace is disposed on the upstream side of the annealing furnace, an all-radiant tube-type annealing furnace does not have an oxidation step just prior to reduction annealing. This is disadvantageous in ensuring coatability for a steel sheet containing an easily oxidizable element such as Si or Mn.

As a method for producing a hot-dip galvanized steel sheet using, as a base material, a high-strength steel sheet containing a large amount of Si and Mn, Patent Literature 1 and Patent Literature 2 disclose a technique which involves internally oxidizing a surface region of the base steel by increasing the dew point in a heating process in an annealing furnace. However, the technique described in Patent Literature 1 and Patent Literature 2 assume the entire internal area of the furnace as an area for controlling the dew point; therefore, it is difficult to control the dew point, and thus is difficult to perform a stable operation. When a galvannealed steel sheet is produced under unstable dew point control, there will be variation in the state of distribution of an internal oxide formed in the base steel sheet, which may result in a fear of the formation of defects, such as unevenness (variation) in coating wetting and unevenness (variation) in alloying, in the length and width directions of the steel sheet.

Patent Literature 3 discloses a technique which involves regulating not only the concentrations of H₂O and O₂, which are oxidizing gases, but the concentration of CO₂ as well to internally oxidize a surface region of a base steel just prior to coating and suppress external oxidation, thereby improving the appearance of a coating. However, when a base steel contains a particularly large amount of Si as in Patent Literature 3, cracking is likely to occur in the surface of the base steel sheet during forming due to the presence of an internal oxide, resulting in a deterioration of the exfoliation resistance of a coating. The corrosion resistance will also be deteriorated. In addition, there is a fear that CO₂ may cause contamination inside a furnace and carburization of the surface of the steel sheet, resulting in problems such as a change in the mechanical characteristics.

In recent years, high-strength hot-dip galvanized steel sheets and high-strength galvannealed steel sheets have been increasingly used for parts which are to be subjected to severe forming (hereinafter referred to as strong forming), and the importance of the exfoliation resistance of a galvanized steel sheet during strong forming is increasing. In particular, a galvanized steel sheet is required to resist exfoliation of a coating in a forming portion when the steel sheet is subjected to bending at an angle of more than 90°, or to an acute angle, or when the steel sheet is formed by the application of an impact.

In order for a galvanized steel sheet to satisfy the above-described properties, the steel is required to contain a large amount of Si to ensure a desired steel sheet microstructure. In addition, a higher level of control is required for the microstructure and structural fabric of a surface region of the base steel, which is located just beneath a coating layer and which can be the point of origin of a crack during strong forming. However, such control is difficult with prior-art techniques: it has not been possible to produce a hot-dip galvanized steel sheet, which exhibits excellent coating adhesion during strong forming, using a Si-containing high-strength steel sheet as a base material in a CGL equipped with an all-radiant tube-type furnace as an annealing furnace.

### Citation List

### Patent Literature

PTL 1: Domestic Re-publication of PCT International Publication for Patent Application No. 2014-102901
PTL 2: Japanese Unexamined Patent Application Publication (Translation of PCT Application) No. 2014-525986
PTL 3: Japanese Unexamined Patent Application Publication No. 2006-233333

### Summary of Invention

### Technical Problem

The present invention has been made in view of the above situation. It is therefore an object of the present invention to provide a high-strength hot-dip galvanized steel sheet which is produced in a CGL equipped with an all-radiant tube-type furnace as an annealing furnace, which uses a steel sheet containing Si and Mn as a base material and which has excellent coating appearance and exhibits excellent coating adhesion during strong forming, and to provide a method for producing the steel sheet.

The "high strength" of the high-strength galvanized steel sheet of the present invention means that the tensile strength is 780 MPa or more.

### Solution to Problem

From the viewpoint of ensuring coatability, it is effective to provide an oxidation process just prior to annealing in a furnace. However, this method has the problems of exfoliation of a coating during forming and corrosion resistance. In view also of cost and operability, there is a strong demand to ensure coatability even with the use of an all-radiant tube-type furnace. In conventional practice, the dew point of an atmosphere in an annealing furnace is increased by increasing the water vapor partial pressure in the entire annealing furnace so as to oxidize the interior of a surface region of a steel sheet. Simultaneously with the internal oxidation, surface diffusion and surface oxidation of easily oxidizable elements in the steel (hereinafter also referred to as surface enrichment) will occur. Hence, in order to ensure coating appearance and coating adhesion, it is necessary to efficiently suppress surface enrichment. The present inventors, through their intensive studies of factors related to internal oxidation and surface enrichment, found that it is extremely important to allow an annealing atmosphere to contain a minute amount of a corrosive gas such as SO₂ or HCl, and to control the dew point in a temperature range of not less than 700°C. The present inventors, through their investigation of necessary dew points at various steel sheet annealing temperatures, also found out that when the maximum temperature of a steel sheet in an atmosphere in a furnace is represented by T°C, the maximum temperature T and the concentrations of Si and Mn in the steel have a significant effect on the oxidation of a surface region of the steel sheet, ranging within 100 µm from the surface of the base steel sheet toward the center in the thickness direction (hereinafter sometimes referred to as internal oxidation), and on surface enrichment. Furthermore, the present inventors found out that as a method for performing the necessary oxidation of a surface region of a steel sheet, ranging within 100 µm from the surface of the base steel sheet toward the center in the thickness direction, while efficiently suppressing surface enrichment, it is effective to control the dew point X°C in a furnace, whose internal temperature is up to the maximum temperature T°C, to be not less than a dew-point temperature calculated by the following inequality (1) in the steel sheet temperature range of 700°C to T°C (700°C < T ≤ 900°C) : Dew point X ≥ (-50 + [Si% by mass] × (T - 600)/30 + [Mn% by mass] × (T - 600)/25) (1)

The reason why the maximum temperature T°C of the steel sheet in the furnace atmosphere is made 900°C or less is that when the maximum temperature T°C exceeds 900°C, it will be difficult to suppress the surface enrichment of Si and Mn and, in addition, the internal oxidation will be excessive, resulting in a deterioration of the surface appearance and a reduction in the coating adhesion during forming.

By performing such control, selective surface oxidation and surface enrichment can be suppressed, making it possible to obtain a high-strength hot-dip galvanized steel sheet which has excellent coating appearance and exhibits excellent coating adhesion during strong forming. Excellent coating appearance herein refers to an appearance without a bare spot or uneven alloying.

The high-strength hot-dip galvanized steel sheet obtained by the above method has an oxygen content, per one surface, of not less than 0.030 g/m² and not more than 0.40 g/m² in a surface region of the steel sheet, located just beneath the zinc coating layer and ranging within 100 µm from the surface of the base steel sheet. Further, the maximum length of oxides present in the surface region of the steel sheet is 6.0 µm or less, and the number of oxides present in the surface region of the steel sheet and having a length of 1.0 µm or more is 20 or less per 100 µm of the length of the surface region of the steel sheet in the width direction of the steel sheet. This makes it possible to achieve stress relaxation and crack prevention in the surface region of the base steel during bending, thereby achieving excellent coating appearance and excellent coating adhesion during strong forming.

The present invention is based on the above findings, and has the following features.
[1] A method for producing a high-strength hot-dip galvanized steel sheet including a steel sheet having a chemical composition containing, in % by mass, C: not less than 0.08% and not more than 0.25%, Si: not less than 0.1% and less than 2.0%, Mn: not less than 1.5% and not more than 3.5%, P: 0.02% or less, S: 0.01% or less, Al: 0.10% or less, and N: 0.006% or less, the mass ratio of Si to Mn (Si/Mn) being 0.25 or more, and the balance being Fe and incidental impurities, and a zinc coating layer formed on the surface of the steel sheet with a coating weight of not less than 20 g/m² and not more than 120 g/m² per one surface of the steel sheet, the method including subjecting the steel sheet to annealing and hot-dip galvanization in a continuous hot-dip galvanizing facility, wherein the maximum temperature T of the steel sheet in an annealing furnace is 900°C or less, wherein the dew point X (°C) of an atmosphere in the furnace in the steel sheet temperature range of 700°C to T°C is controlled to be not less than a temperature calculated by the following inequality (1), and wherein the atmosphere in the furnace contains hydrogen in an amount of not less than 3.0 vol % and not more than 20.0 vol %, and at least one of SO₂ in an amount of not less than 0.1 vol ppm and not more than 3.0 vol ppm and HCl in an amount of not less than 0.5 vol ppm and not more than 10.0 vol ppm, with the balance of the atmosphere being nitrogen and impurities:
   Dew point X ≥ (-50 + [Si% by mass] × (T - 600)/30 + [Mn% by mass] × (T - 600)/25) where Si% by mass refers to the mass % of Si in the chemical composition of the steel sheet, and Mn% by mass refers to the mass % of Mn in the chemical composition of the steel sheet.
[2] The method for producing a high-strength hot-dip galvanized steel sheet according to [1], wherein the steel sheet further contains, in % by mass, at least one group selected from the following groups A to E:
   group A: at least one of Ti, Nb, V, and Zr in a total amount of 0.2% or less,
   group B: at least one of Mo, Cr, Cu, and Ni in a total amount of 0.01% to 0.5%,
   group C: B in an amount of 0.0003% to 0.005%,
   group D: at least one of Sb and Sn in a total amount of 0.001% to 0.2%, and
   group E: at least one of Ca, Mg, and REM in a total amount of 0.0001% to 0.0005%.
[3] A high-strength hot-dip galvanized steel sheet including: a steel sheet having a chemical composition containing, in % by mass, C: not less than 0.08% and not more than 0.25%, Si: not less than 0.1% and less than 2.0%, Mn: not less than 1.5% and not more than 3.5%, P: 0.02% or less, S: 0.01% or less, Al: 0.10% or less, and N: 0.006% or less, the mass ratio of Si to Mn (Si/Mn) being 0.25 or more, and the balance being Fe and incidental impurities; and a zinc coating layer formed on the surface of the steel sheet with a coating weight of not less than 20 g/m² and not more than 120 g/m² per one surface of the steel sheet, wherein the oxygen content, per one surface of the steel sheet, is not less than 0.030 g/m² and not more than 0.40 g/m² in a surface region of the steel sheet, located just beneath the zinc coating layer and ranging within 100 µm from the surface of the base steel sheet toward the center in the thickness direction, wherein the maximum length of oxides present in the surface region of the steel sheet is 6.0 µm or less, and wherein the number of oxides present in the surface region of the steel sheet and having a length of 1.0 µm or more is 20 or less per 100 µm of the length of the surface region of the steel sheet in the width direction of the steel sheet.
[4] The high-strength hot-dip galvanized steel sheet according to [3], wherein the steel sheet further contains, in % by mass, at least one group selected from the following groups A to E:
   group A: at least one of Ti, Nb, V, and Zr in a total amount of 0.2% or less,
   group B: at least one of Mo, Cr, Cu, and Ni in a total amount of 0.01% to 0.5%,
   group C: B in an amount of 0.0003% to 0.005%,
   group D: at least one of Sb and Sn in a total amount of 0.001% to 0.2%, and
   group E: at least one of Ca, Mg and REM in a total amount of
   0.0001% to 0.0005%.

### Advantageous Effects of Invention

The present invention makes it possible to obtain a high-strength hot-dip galvanized steel sheet which has excellent coating appearance and exhibits excellent coating adhesion during strong forming.

### Description of Embodiments

Embodiments of the present invention will now be described. The present invention is not limited to the following embodiments.

Annealing atmosphere conditions that determine the microstructure of the surface of a base steel sheet located just beneath a coating layer, which is the most important factor of the present invention, will be described first.

During a heating process for annealing in a continuous hot-dip galvanizing facility, the dew point X (°C) of an atmosphere in a furnace in the steel sheet temperature range of 700°C to T°C is controlled to be not less than a temperature calculated by the following inequality (1). T°C represents the maximum temperature of the atmosphere in the annealing furnace, and satisfies the relation 700°C < T ≤ 900°C. Dew point X ≥ (-50 + [Si% by mass] × (T - 600)/30 + [Mn% by mass] × (T - 600)/25)

In order to perform recrystallization of a strain imparted by the usual cold rolling, the maximum temperature of the steel sheet during the heating process for annealing needs to exceed 700°C. On the other hand, when the maximum temperature T°C exceeds 900°C, it will be difficult to suppress the surface enrichment of Si and Mn and, in addition, the oxidation of a surface region of the steel sheet, ranging within 100 µm from the surface of the base steel sheet toward the center in the thickness direction, will be excessive, resulting in a deterioration of the surface appearance and a reduction in the coating adhesion during forming. Therefore, the maximum temperature of the steel sheet needs to be more than 700°C and not more than 900°C.

The control range of the atmospheric dew point X in the steel sheet temperature range of 700°C to T°C (700°C < T ≤ 900°C) during the heating process will now be described.

In order to suppress surface oxidation, it is most important to control the dew point at a steel sheet temperature of 700°C or more where the diffusion rates of elements are high. To internally oxidize Si and Mn efficiently and suppress surface enrichment, it is necessary to control the dew point X in a temperature range of not less than 700°C to be in the dew point range defined by the inequality (1). When the dew point X is below this range, the suppression of surface enrichment will be insufficient, leading to a deterioration of the coating appearance and a reduction in the coating adhesion. While the upper limit of the dew point is not particularly limited, a too-high dew point incurs a high operating cost of a humidification equipment. Therefore, the dew point is preferably +20°C or less, more preferably less than +5°C.

In a temperature range below 700°C, the surface diffusion of easily oxidizable elements such as Si and M is significantly reduced due to the low temperature, and thus the surface enrichment is suppressed (or does not occur). Therefore, wetting between molten zinc and the steel sheet is not impaired. Therefore, dew point control is necessary in a temperature range of not less than 700°C.

The hydrogen concentration in the furnace atmosphere during annealing needs to be not less than 3.0 vol % and not more than 20.0 vol %. When the hydrogen concentration in the furnace atmosphere in a temperature range of not less than 700°C is too high, the amount of diffusible hydrogen in the steel will be too high, causing hydrogen embrittlement and impairing formability. On the other hand, when the hydrogen concentration in the furnace atmosphere is too low, the reduction of the surface of the steel sheet will be insufficient and the surface will become inactive, leading to poor coating. Therefore, the hydrogen concentration in a temperature range of not less than 700°C needs to be made not less than 3.0 vol % and not more than 20.0 vol %.

The furnace atmosphere during annealing needs to contain at least one of SO₂ in an amount of not less than 0.1 vol ppm and not more than 3.0 vol ppm and HCl in an amount of not less than 0.5 vol ppm and not more than 10.0 vol ppm. While detailed reasons are not fully understood, the following is conceivable. When such a corrosive gas is present in an appropriate amount, the gas will promote oxidation of Si and Mn in the interior of the steel sheet rather than at the surface of the steel sheet. This improves the coating adhesion and, in addition, reduces the length of an oxide present in a surface region of the steel sheet as described below, thereby improving the corrosion resistance after forming. The improvement effect of such a corrosive gas becomes apparent when at least one of SO₂ in an amount of 0.1 vol ppm or more and HCl in an amount of 0.5 vol ppm or more is satisfied. However, when the amount of SO₂ exceeds 3.0 vol ppm or the amount of HCl exceeds 10.0 vol ppm, there is a possibility that the deterioration of the furnace body inside the furnace is promoted. Therefore, the amount of SO₂ needs to be made not less than 0.1 vol ppm and not more than 3.0 vol ppm, and the amount of HCl needs to be made not less than 0.5 vol ppm and not more than 10.0 vol ppm. The balance of the atmosphere in the furnace during annealing includes nitrogen and impurities. The atmosphere may contain gases, such as CO and CO₂, as impurities because they do not impair the intended effect.

The concentration of the minute amount of corrosive gas, such as SO₂ or HCl, can be controlled by adjusting the amount of a gas containing the corrosive gas, which is introduced directly into the furnace. The gas concentration can also be controlled by applying a liquid containing H₂SO₄ or HCl to the steel sheet before it enters the furnace, or by diluting the liquid with water. In short, it is important to control the concentration of a minute amount of corrosive gas(es) such as SO₂ or HCl. Methods for controlling the concentration of such a minute amount of corrosive gas are not limited to the above-described methods.

The chemical composition of the high-strength hot-dip galvanized steel sheet, to which the present invention is directed, will now be described. The composition is expressed in % by mass.

### C: not less than 0.08% and not more than 0.25%

C is an element which is effective in increasing the strength of the steel sheet, and contributes to increasing the strength by forming martensite, which is one of hard phases in the steel microstructure. Further, depending on the production method, C also contributes to increasing the strength by forming a fine alloy compound or alloy carbonitride with a carbide-forming element such as Nb, Ti, V, or Zr. In order to achieve such an effect, the C content needs to be 0.08% or more. On the other hand, when the C content exceeds 0.25%, martensite tends to harden excessively, resulting in a failure to improve bendability despite control of inclusions or the amount of hydrogen in the steel. Therefore, the C content is made not less than 0.08% and not more than 0.25%. The C content is preferably 0.09% or more from the viewpoint of stably achieving TS at a level of 780 MPa or more.

### Si: not less than 0.1% and less than 2.0%

Si is an element which contributes to increasing the strength of the steel sheet mainly through solid solution strengthening, and causes a relatively small decrease in ductility with increase in the strength. Thus, Si contributes not only to increasing the strength but to improving the balance between the strength and the ductility as well. The improvement in ductility leads to an improvement in bendability. On the other hand, Si is likely to form a Si oxide on the surface of the steel sheet, which may cause bare spots. When such a Si oxide is formed in excess, a large amount of scale may be formed during hot rolling to form scale marks on the surface of the steel sheet, thereby deteriorating the surface quality. Thus, Si is preferably used in the minimum amount required to ensure strength. In particular, the lower limit of the Si content is made 0.1% or more and, from the viewpoint of coatability, the upper limit is made less than 2.0%, preferably 1.8% or less.

### Mn: not less than 1.5% and not more than 3.5%

Mn is an effective element which contributes to increasing the strength through solid solution strengthening and martensite formation. To achieve this effect, Mn needs to be contained in an amount of 1.5% or more, preferably 1.8% or more. On the other hand, when the Mn content exceeds 3.5%, the steel microstructure is likely to be uneven e.g. due to Mn segregation, resulting in a reduction in formability. In addition, Mn is likely to be externally oxidized to form an oxide or composite oxide on the surface of the steel sheet, which may cause bare spots. Therefore, the upper limit is 3.5%.

### P: 0.02% or less

While P is an effective element which contributes to increasing the strength of the steel sheet through solid solution strengthening, it affects coatability. In particular, it causes deterioration of wetting between a coating layer and the steel sheet and a decrease in the alloying rate of the coating layer. Such effect of P is large especially on a high-alloy system for obtaining a high-strength steel sheet. Therefore, the upper limit of the P content is made 0.02%. The P content is more preferably 0.01% or less. There is no particular limitation on the lower limit. However, when the P content is less than 0.0001%, it will lead to a reduction in production efficiency and an increase in dephosphorization cost in the production process; therefore, the P content is preferably made 0.0001% or more.

### S: 0.01% or less

S is likely to form sulfide inclusions in the steel. In particular, S is likely to form MnS inclusions when a large amount of Mn is used to increase the strength of the steel. Such inclusions may impair bendability. Further, S may cause hot shortness and thus adversely affect the production process. Therefore, the amount of S should preferable be reduced as much as possible. In the present invention, the S content is acceptable up to 0.01%. While the lower limit is not particularly limited, the S content of less than 0.0001% will lead to a reduction in production efficiency and an increase in costs in the production process. Therefore, the S content is preferably made 0.0001% or more.

### Al: 0.10% or less

Al is added as a deoxidizer. To achieve this effect, Al is preferably contained in an amount of 0.001% or more. On the other hand, when the Al content exceeds 0.10%, inclusions are likely to be formed during the production process, resulting in a deterioration of bendability. Therefore, the Al content should be 0.10% or less, and should preferably be 0.08% or less as sol. Al in the steel.

### N: 0.006% or less

When the N content exceeds 0.006%, a nitride may be formed in excess in the steel, causing a reduction in formability and a deterioration in the surface quality of the steel sheet. Therefore, the N content is made 0.006% or less, preferably 0.005% or less. From the viewpoint of purifying the microstructure and improving ductility, the N content is preferably as low as possible; however, this leads to a reduction in production efficiency and an increase in costs in the production process. Therefore, the lower limit of the N content is made 0.0001% or more.

The chemical composition may contain the following components as optional components. It is to be noted that when some of the below-described optional elements are contained in amounts less than the below-described lower limit values, such optional components are regarded as being contained as incidental impurities.

Inclusion, in % by mass, of at least one group selected from the following groups A to E:
group A: at least one of Ti, Nb, V, and Zr in a total amount of 0.2% or less,
group B: at least one of Mo, Cr, Cu, and Ni in a total amount of 0.01% to 0.5%,
group C: B in an amount of 0.0003% to 0.005%,
group D: at least one of Sb and Sn in a total amount of 0.001% to 0.2%, and
group E: at least one of Ca, Mg, and REM in a total amount of 0.0001% to 0.0005%.

Ti, Nb, V, and Zr form a carbide and a nitride (sometimes a carbonitride) with C and N. Fine carbide or nitride precipitates contribute to increasing the strength of the steel sheet. In particular, the strength is increased by precipitating a carbide or nitride in soft ferrite. Further, the effect of reducing the strength difference between the ferrite and martensite contributes to improving bendability and stretch flangeability. Furthermore, these elements have the effect of making finer the microstructure of a hot-rolled coil, and also have the effect of making finer the microstructure of the steel after cold rolling and annealing. This also contributes to increasing strength and improving formability such as bendability. From the viewpoint of achieving these effects, at least one of Ti, Nb, V, and Zr is preferably contained in a total amount of 0.005% or more. However, the addition of such an element in an excessive amount will increase deformation resistance during cold rolling, thereby reducing productivity. Further, the presence of excessive or coarse precipitates reduces the ductility of ferrite, thereby reducing the ductility and bendability of the steel sheet. Therefore, the upper limit of the total amount of at least one of Ti, Nb, V, and Zr is 0.2%.

Mo, Cr, Cu, and Ni are elements which enhance the hardenability and facilitate the formation of martensite, thereby contributing to increasing the strength. In order to achieve these effects, at least one of Mo, Cr, Cu, and Ni is preferably contained in a total amount of 0.01% or more. The addition of Mo, Cr, Cu, or Ni in an excessive amount leads to saturation of the effect and increased costs. Further, an excessive amount of Cu induces cracking during hot rolling and causes surface flaws. Therefore, at least one of Mo, Cr, Cu and Ni is preferably contained in a total amount of 0.5% or less. Ni has the effect of suppressing the formation of surface flaws caused by the addition of Cu. Therefore, when Cu is added, it is preferred to add Ni concomitantly. In particular, Ni is preferably contained in an amount of at least 1/2 of the amount of Cu.

B is also an element which enhances the hardenability and facilitates the formation of martensite, thereby contributing to increasing the strength. A lower limit is placed on the B content to achieve the effect of suppressing the formation of ferrite during an annealing/cooling process, while an upper limit is placed on the B content because the addition of an excessive amount of B exhibits saturation of the strength increasing effect and instead causes excessive hardening, resulting in disadvantages such as weld cracking during welding. Therefore, when B is contained, its content is preferably not less than 0.0003% and not more than 0.005%.

Sb and Sn are elements which are effective in suppressing decarburization, denitrification, deboronization, or the like to reduce the reduction in the strength of the steel sheet. Therefore, at least one of Sb and Sn is preferably contained in a total amount of 0.001% or more. However, the addition of the element(s) in an excessive amount deteriorates the surface quality of the steel sheet. Therefore, the upper limit of the total amount is preferably 0.2% or less.

The addition of Ca, Mg, and REM in a small amount can achieve the effect of making the shape of a sulfide spherical and improving the bendability of the steel sheet. On the other hand, excessive addition of such an element causes excessive formation of a sulfide and an oxide in the steel, resulting in a reduction in the formability, in particular the bendability, of the steel sheet. Therefore, at least one of Ca, Mg, and REM is preferably contained in a total amount of 0.0005% or less. While the lower limit of the content is not particularly limited, at least one of Ca, Mg, and REM is preferably contained in a total amount of 0.0001% or more.

### Mass ratio of Si to Mn (Si/Mn) of 0.25 or more

To achieve excellent coatability, it is important to control elements that are easily oxidized in the steel and, from the viewpoint of suppressing external oxidation of Mn, it is necessary to form a Si-Mn composite oxide in the interior of the steel sheet. When the Si/Mn ratio is less than 0.25, a sufficient amount of Si-Mn composite oxide will not be formed in a surface region of the steel sheet, ranging within 100 µm from the surface of the base steel sheet, thereby causing surface enrichment and poor coating. Therefore, the Si/Mn ratio is made 0.25 or more.

The balance of the composition is Fe and incidental impurities.

The high-strength galvanized steel sheet of the present invention has a zinc coating layer formed on the surface of the steel sheet with a coating weight of not less than 20 g/m² and not more than 120 g/m² per one surface of the steel sheet. When the coating weight is less than 20 g/m², it is difficult to ensure corrosion resistance. On the other hand, when the coating weight exceeds 120 g/m², the coating adhesion will be poor.

In the high-strength galvanized steel sheet of the present invention, the oxygen content as measured by the method described in the Examples, per one surface of the steel sheet, is not less than 0.030 g/m² and not more than 0.40 g/m² in a surface region of the steel sheet, located just beneath the zinc coating layer and ranging within 100 µm from the surface of the base steel sheet toward the center in the thickness direction. From the viewpoint of obtaining fine oxides, oxides containing the above oxygen preferably include as a main component at least one element selected from Fe, Si, Mn, Al, P, B, Nb, Ti, Cr, Mo, and V. Further, the maximum length of the oxides present in the surface region of the steel sheet is 6.0 µm or less, and the number of internal grain-boundary oxides present in the surface region of the steel sheet and having a length of 1.0 µm or more is 20 or less per 100 µm of the length of the surface region of the steel sheet in the width direction of the steel sheet.

In order for a hot-dip galvanized steel sheet containing Si and a large amount of Mn to achieve a good appearance and satisfactory coating adhesion during processing, it is necessary to control the amount and size of oxides in a surface region of the base steel sheet, which is located just beneath the coating layer and which can be the point of origin of a crack during strong forming. In the present invention, therefore, in the annealing process described below, dew point control was performed to control the oxygen potential. The dew point control increases the oxygen potential, so that Si, Mn, etc., which are easily oxidizable elements, are internally oxidized before coating. As a result, the activities of Si and Mn in the surface region of the base steel are reduced and their external oxidation is suppressed, leading to improved coating appearance and coating adhesion. This improvement effect is remarkable when the oxygen content in the surface region of the steel sheet, ranging within 100 µm from the surface of the base steel sheet, is 0.030 g/m² or more per one surface of the steel sheet. Therefore, the lower limit is made 0.030 g/m² or more per one surface. On the other hand, even when the oxygen content exceeds 0.40 g/m² per one surface, the effect will be saturated and, in some cases, the large amount of oxygen may cause cracking during strong forming. Therefore, the upper limit is made 0.40 g/m².

The present inventors, through their detailed investigation of conditions for oxides present in the surface region of the steel sheet which can be the point of origin of a crack, found that oxides, having a width of 0.1 µm or more and a length of 1.0 µm or more and present in the surface region of the steel sheet, contribute to cracking, and that the longer the length, the larger the cracking effect. Therefore, the maximum length of oxides present in the surface layer of the steel sheet is made 6.0 µm or less. When the maximum oxide length exceeds 6.0 µm, the oxides may serve as the point of origin of a crack during forming, causing a significant deterioration of adhesion and post-forming corrosion resistance. On the other hand, oxides which satisfy either a width of less than 0.1 µm or a length of less than 1.0 µm have little effect on cracking during strong forming, and therefore do not affect adhesion or post-forming corrosion resistance. The lower limit of the maximum length of oxides present in the surface region of the steel sheet is not particularly limited; it may be about 0.3 µm in the method of the present invention. The lower limit of the maximum length of oxides is preferably 0.3 µm or more.

Further, among the oxides present in the surface region of the steel sheet, the number of internal oxides having a length of 1.0 µm or more is made 20 or less per 100 µm of the length of the surface region of the steel sheet in the width direction of the steel sheet. When the number of internal oxides having a length of 1.0 µm or more exceeds 20 per 100 µm of the length of the surface region of the steel sheet in the width direction of the steel sheet, the internal oxides may serve as the point of origin of a crack during forming as in the case where the maximum oxide length exceeds 6.0 µm, causing a deterioration of adhesion and post-forming corrosion resistance. Therefore, the number of internal oxides having a length of 1.0 µm or more is made 20 or less per 100 µm of the length of the surface region of the steel sheet in the width direction of the steel sheet. While the lower limit of the number is not particularly limited, when the number is less than 4, it is difficult to satisfy the oxygen content of 0.030 g/m² per one surface in the surface region of the steel sheet. Therefore, the number is preferably 4 or more.

A process for producing the high-strength galvanized steel sheet according to the present invention will now be described. The production process according to the present invention includes a casting step, a hot rolling step, a pickling step, a cold rolling step, an annealing step, and a galvanizing step. Each step will be described below.

The casting step is a step of casting a steel having the above-described chemical composition under conditions in which the flow rate of molten steel at the solidification interface near the meniscus in a mold is 16 cm/sec or more to produce a steel material.

### Production of Steel Material (Slab)

A steel for use in the production process of the present invention is what is generally called a slab, which is produced by a continuous casting process for the purpose of preventing macro-segregation of alloy components. It is also possible to use a steel produced by ingot casting or thin slab casting.

In the case of continuous casting, from the viewpoint of controlling inclusions, casting is performed under conditions in which the flow rate of molten steel at the solidification interface near the meniscus in a mold is 16 cm/sec or more. "Near the meniscus in a mold" means the interface between molten steel and a powder used in continuous casting in the mold. In the case of ingot casting, it is desirable to sufficiently float inclusions during solidification and cut off the portion of the floated and gathered inclusions, and use the remainder in the next step.

The hot rolling step is a step of hot-rolling the steel material after the casting step.

After the steel slab is produced, the slab is hot-rolled, for example, by a conventional method in which the slab is once cooled to room temperature and then reheated, a method in which the hot slab is loaded into a furnace, without cooling it to around room temperature, to hot-roll the slab, a method in which the slab is slightly heated, and then immediately hot-rolled, or a method in which the slab is subjected to hot rolling while maintaining the high temperature after casting. Any of these methods can be performed with no problem.

While there is no particular limitation on a method for hot-rolling the slab, it is preferably performed under the following conditions.

The heating temperature of the steel slab is preferably in the range of not less than 1100°C and not more than 1350°C. It is to be noted in this regard that precipitates present in the steel slab are likely to become coarse, which is disadvantageous when, for example, it is intended to ensure strength through precipitation strengthening. Further, such coarse precipitates may act as nuclei and adversely affect microstructure formation in the later annealing step. In addition, it is beneficial for product quality to remove bubbles, defects, etc. from the slab surface by heating, thereby reducing cracks and irregularities on the surface of the steel sheet and achieving a flat steel sheet surface. The slab heating temperature is determined from such viewpoints. To achieve such effects, the slab heating temperature is preferably 1100°C or more. On the other hand, when the slab heating temperature exceeds 1350°C, coarsening of austenite grains will occur, and the steel microstructure of the final product will also become coarse, causing a reduction in the strength and bendability of the steel sheet. Therefore, the upper limit of the slab heating temperature is preferably 1350°C or less.

In the hot rolling process, including rough rolling and finish rolling, a steel slab is generally made into a sheet bar by rough rolling, and then the sheet bar is made into a hot-rolled coil by finish rolling. However, depending on the capacity of the mill used, etc., the hot rolling step may be performed in any other manner as long as a predetermined size of the product can be ensured.

The following hot rolling conditions are recommended.

### Finish Rolling Temperature: 800°C to 950°C

The finish rolling temperature is made 800°C or more in order to achieve a uniform microstructure in a hot-rolled coil, thereby making the microstructure of the final product uniform. When the microstructure is non-uniform, the bendability is lower. On the other hand, when the finish rolling temperature exceeds 950°C, a considerable amount of an oxide (scale) will be formed and the interface between the base steel sheet and the oxide will become rough, resulting in a deterioration of the surface quality after pickling and cold rolling. In addition, crystal grains will become coarse, which causes a reduction in the strength and bendability of the steel sheet as in the case where the microstructure of the steel slab becomes coarse.

In order to make the microstructure of the steel sheet finer and uniform, the hot-rolled coil (hot-rolled sheet) after the above-described hot rolling step is preferably cooled such that cooling is started within 3 seconds after the completion of finish rolling, and the steel sheet is cooled at an average cooling rate of 10 to 250°C/s in the temperature range of [finish rolling temperature] to [finish rolling temperature - 100]°C. The steel sheet is then coiled preferably in the temperature range of 450 to 700°C.

The pickling step is a step of pickling the steel sheet after the hot rolling step. Scales are removed from the steel sheet surface by pickling. The pickling conditions may be set appropriately.

The cold rolling step is a step of cold-rolling the steel sheet after the pickling step.

The cold-rolling reduction ratio is preferably not less than 20% and not more than 80%. By making the reduction ratio not less than 20%, a uniform and fine steel microstructure can be obtained in the subsequent annealing step; therefore, the reduction ratio is preferably not less than 20%. When the cold-rolling reduction ratio is less than 20%, coarse grains are likely to be formed during annealing and, in addition, the microstructure of the steel is likely to become non-uniform. There is, therefore, a fear of a reduction in the strength and formability of the final product as described above. On the other hand, a high reduction ratio can lead to a reduced productivity due to the rolling load, and can also lead to a poor shape. Therefore, the reduction ratio is preferably made not more than 80%. Pickling of the steel sheet may be performed after the cold rolling.

In the annealing step, the steel sheet is subjected to annealing in a furnace atmosphere which is controlled in the manner described above.

The galvanizing step is performed, for example, by immersing the steel sheet in a hot-dip galvanizing bath. The hot-dip galvanization may be performed in the usual manner while adjusting the coating weight within the above-described range per one surface.

After the galvanization, the zinc coating may be subjected to an alloying treatment as necessary. The treatment may be performed by holding the steel sheet after galvanization at a temperature in the range of 450 to 580°C for about 1 to 60 seconds.

### EXAMPLES

Molten steels having the chemical compositions shown in Table 1 were each produced in a converter. The chemical composition of each steel is expressed in mass %, with the balance being Fe and incidental impurities. Each slab was heated to 1200°C, and made into a hot-rolled coil having a thickness of 2.8 mm at a finish rolling temperature of 840°C and a coiling temperature of 550°C. The hot-rolled coil was made into a cold-rolled steel sheet having a thickness of 1.4 mm at a cold-rolling ratio (reduction ratio) of 50%. The cold-rolled steel sheet was annealed in the annealing furnace atmosphere described in Table 2, and cooled to 600°C at an average cooling rate of 3°C/s and finally to 520°C, and was held for 50 seconds. Thereafter, the steel sheet was galvanized to produce a high-strength hot-dip galvanized steel sheet.

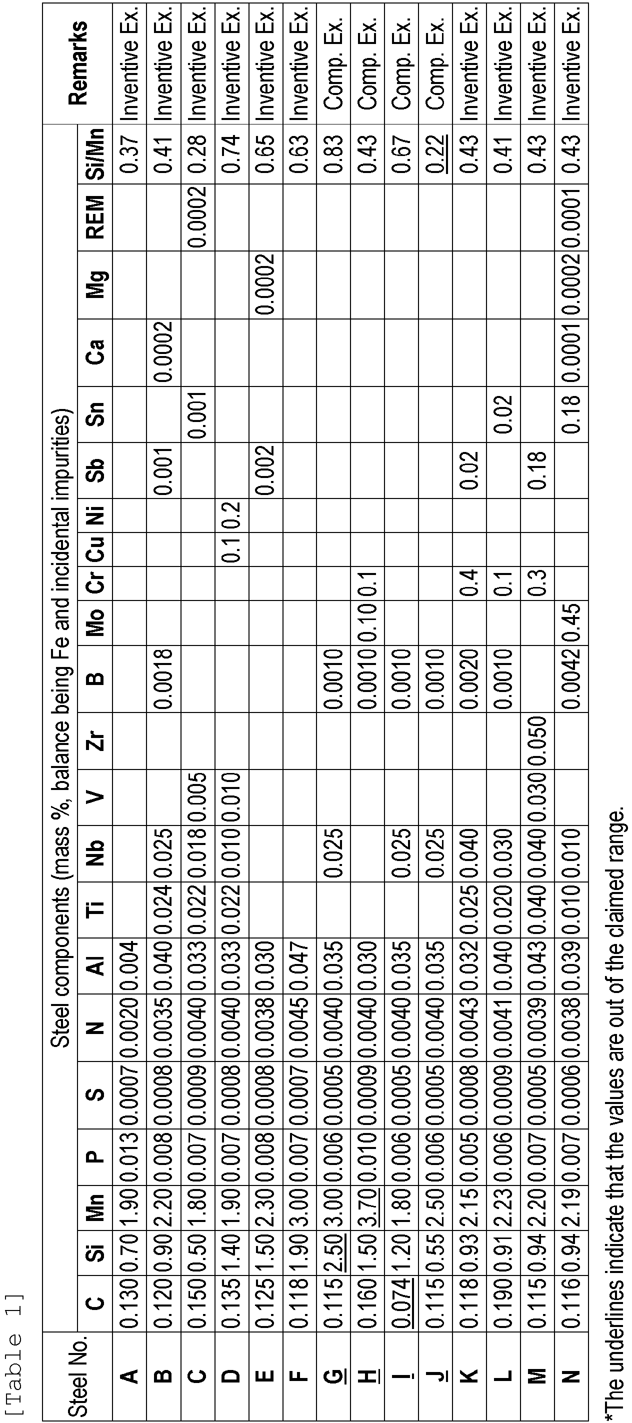

Samples were taken from each of the thus-obtained coated steel sheets. The appearance of each steel sheet was visually observed to evaluate coatability (surface quality). Further, an evaluation of coating properties was performed. Furthermore, a tensile test was conducted to measure the tensile strength (TS). The evaluations were made by the following methods.

### (1) Oxygen Content in a Surface Region of the Steel Sheet, Located Just Beneath the Coating Layer and Ranging Within 100 µm From the Surface of the Base Steel Sheet Toward the Center in the Thickness Direction

To measure the oxygen content in a region just beneath the coating layer, only the coating layer was removed with hydrochloric acid or an alkaline solution, to which an inhibitor had been added so as not to dissolve the base steel, and then the oxygen content was measured by the "impulse furnace-infrared absorption method". Since it is necessary to subtract the amount of oxygen contained in the steel material (i.e., the steel sheet before annealing), in the present invention, a surface region in both surfaces of the high-strength steel sheet after continuous annealing was polished to a depth of 100 µm or more, and the oxygen concentration in the steel was measured. The measured value was taken as the amount OH of oxygen contained in the steel material. Further, the oxygen concentration in the steel throughout the thickness direction of the high-strength steel sheet after continuous annealing was measured, and the measured value was taken as the oxygen amount OI after oxidation. Using the oxygen amount OI in the steel sheet after oxidation and the oxygen amount OH originally contained in the steel material, the difference between OI and OH (= OI - OH) was calculated. The difference value was converted into the amount per unit area of one surface (g/m²), and the converted value was used as the oxygen content.

Further, a sample piece having a size of 10 mm × 10 mm was cut out from the cross section after the removal of the coating layer, and embedded in a resin. The sample was then mirror-finished to prepare a sample for cross section observation. The cross section was observed by SEM at a magnification of 5000 times over a range of 20 µm in the width direction, with 5 fields of view per level, and the maximum length (µm) of internal oxides and the number of internal oxides having a length of 1.0 µm or more were measured in each field of view, and their respective average values were taken as the maximum length of internal oxides and the number of internal oxides having a length of 1.0 µm or more at that level. Only oxides having a width of 0.1 µm or more were counted in the measurement of the number of internal oxides.

### (2) Surface Quality (Appearance)

The appearance of each of the hot-dip galvanized steel sheets produced was visually observed, and rated "O" when no bare spot defect was observed, rated "X" when bare spot defects were observed, or rated "Δ" when uneven coating appearance or the like was observed though there was no bare spot defect. The bare spot defect refers to an area having a diameter of 50 µm or more where no coating is present and the steel sheet is exposed. The results are shown in Table 2.

### (3) Coating Adhesion

### [Alloyed Hot-Dip Galvanized Steel Sheet]

In the examples, an adhesive tape was pressed against a 90-degree bent portion of each hot-dip galvanized steel sheet, and peeled matter was transferred to the adhesive tape. The amount of the peeled matter on the adhesive tape was determined in terms of Zn count number by fluorescent X-ray spectroscopy. The measurement conditions were as follows: mask diameter 30 mm, acceleration voltage 50 kV for fluorescent X-ray spectroscopy, acceleration current 50 mA, and measurement time 20 seconds. Especially in view of the possibility of in-plane unevenness (variation) of coating adhesion, the coating adhesion was measured at 5 positions (30 positions in total) in the width direction: 1/4-width position, 1/2-width position (center position), 3/4-width position, and 50-mm positions from both edges of the steel sheet, every 1 m in the longitudinal direction of the coil, over an arbitrary longitudinal 6-m range of the hot-dip galvanized steel sheet, and the coatability was evaluated based on the highest Zn count according to the following criteria. In the present invention, samples with the following rating ⊚ or O were evaluated as acceptable.
⊚ (acceptable, superior): Zn count number is less than 6000.
O (acceptable, excellent): Zn count number is not less than 6000 and less than 8000.
X (unacceptable): Zn count number is 8000 or more.

### [Non-Alloyed Hot-Dip Galvanized Steel Sheet]

The coating adhesion of each hot-dip galvanized steel sheet was evaluated by a ball impact test. Each steel sheet was attached to a die having a 3/8-inch diameter hole and a 1/2-inch diameter hole, and then a ball impact test was performed under the conditions of a ball weight of 2.8 kg and a drop height of 1 m. Tape peeling was performed on the formed (deformed) portion of the steel sheet, and the presence or absence of a peeled portion of the coating layer on the tape was visually observed and evaluated according to the following criteria. Peeling at a level of less than 1 mm² was determined as minor peeling, and peeling at a level of 1 mm² or more was determined as peeling.
⊚ (acceptable, superior): no peeling of the coating layer for either hole
O (acceptable, excellent): minor peeling for 3/8-inch diameter hole
Δ (unacceptable): peeling for 3/8-inch diameter hole, and no peeling for 1/2-inch diameter hole
X (unacceptable): peeling of the coating for both holes

### (4) Corrosion Resistance After Forming

A test specimen was prepared by performing the same forming as in the exfoliation (peeling) resistance test, but without performing tape peeling. The specimen was subjected to a chemical conversion treatment under the following standard conditions using a degreaser FC-E2011, a surface conditioner PL-X, and a chemical conversion agent Palbond (registered trademark) PB-L3065, all manufactured by Nihon Parkerizing Co., Ltd., in such a manner that the amount of a chemical conversion coating was 1.7 to 3.0 g/m².

### <Standard Conditions>

- Degreasing process: processing temperature 40°C, processing time 120 seconds
- Spray degreasing/surface conditioning process: pH 9.5, processing temperature room temperature, processing time 20 seconds
- Chemical conversion process: temperature of chemical conversion solution 35°C, processing time 120 seconds

The surface of the test specimen, which had undergone the above chemical conversion treatment, was electrocoated with an electrocoating paint V-50, manufactured by Nippon Paint Co., Ltd., such that the coating thickness was 25 µm. The thus-treated test specimen was subjected to the following corrosion test.

### <Salt Spray Test (SST)>

Each of the test specimens, which had undergone the above-described chemical conversion and electrocoating, was cut with a cutter in the bent portion when the test specimen was an alloyed hot-dip galvanized steel sheet, or in the ball-impact portion when the test specimen was a non-alloyed hot-dip galvanized steel sheet, to form a flaw reaching the zinc coating. Thereafter, the test specimen was subjected to a 240-hour salt spray test using a 5 mass % aqueous NaCl solution according to the neutral salt spray test described in JIS Z 2371:2000. The crosscut flaw was then subjected to a tape peeling test, and the maximum total peeling width of the exfoliated area, extending on both sides of the flaw, was measured and evaluated with symbols (⊚, O, X) according to the following criteria. When the maximum total peeling width is 2.0 mm or less, the corrosion resistance in the salt spray test can be evaluated as good.
⊚: maximum total bulge width from the flaw was 2.0 mm or less (good)
O: maximum total bulge width from the flaw was more than 2.0 mm and not more than 2.5 mm (acceptable)
X: maximum total bulge width from the flaw was more than 2.5 mm (unacceptable)

### (5) Tensile Test

A JIS 5 tensile test specimen (JIS Z 2201) was taken from each galvanized steel sheet in a direction perpendicular to the rolling direction, and subjected to a tensile test at a constant test speed (crosshead speed) of 10 mm/min. The tensile strength was determined by dividing the maximum load in the tensile test by the initial cross-sectional area of the parallel portion of the test specimen. The thickness used in the calculation of the cross-sectional area of the parallel portion was the thickness including the thickness of the coating layer.

### (6) Furnace Gas Analysis Method

A furnace gas sample was taken from the annealing furnace, and SO₂ and HCl were quantified by ion chromatography. The analysis was performed three times, and the average value for each gas component was taken as its concentration in the furnace gas.

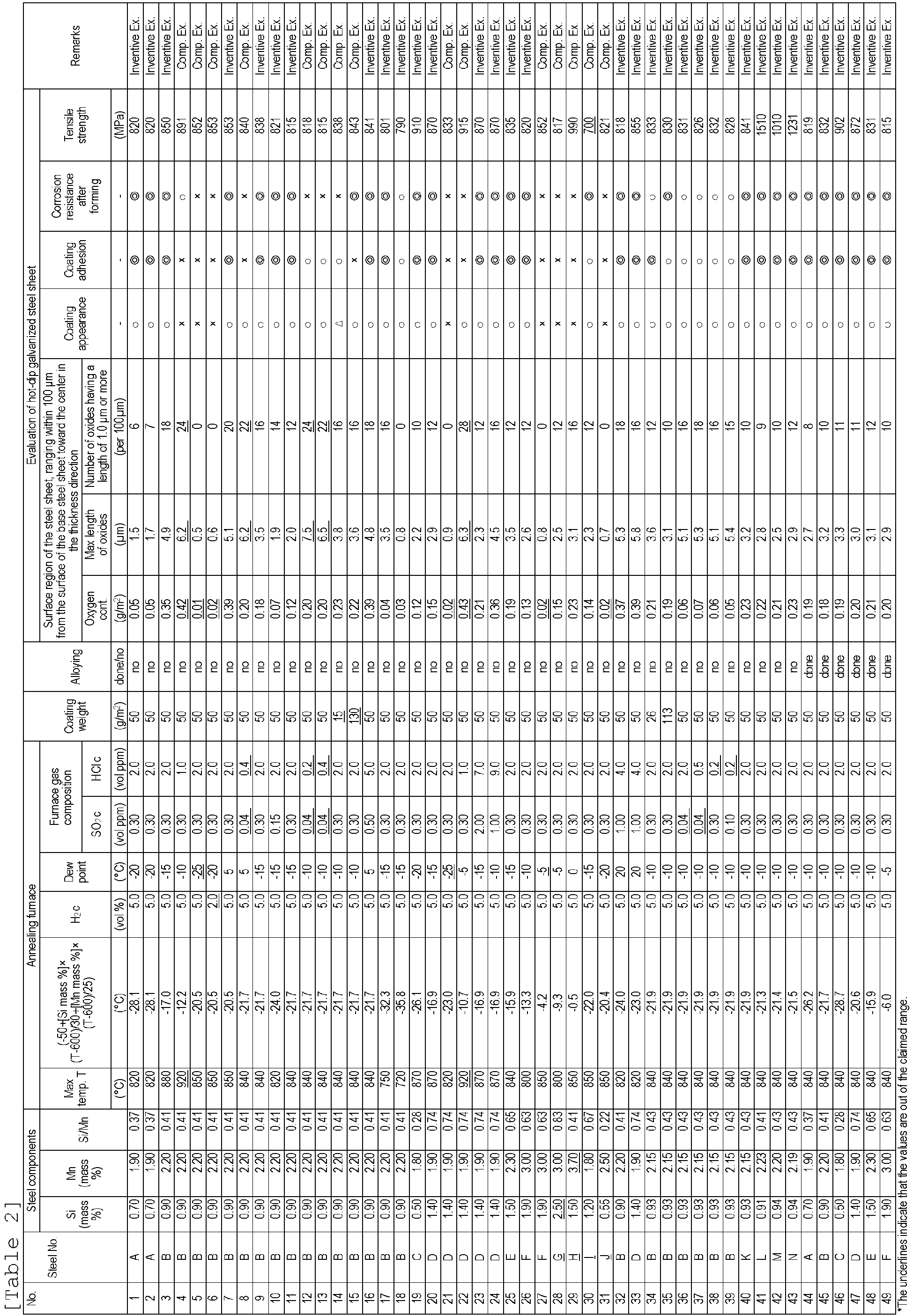

As is clear from Table 2, the hot-dip galvanized steel sheets produced by the method of the present invention are high-strength steel sheets containing a large amount of easily oxidizable elements such as Si and Mn, and yet have excellent coating adhesion and good coating appearance. On the other hand, the comparative steel sheets are inferior in at least one of coating appearance, coating adhesion, and tensile strength.

### Industrial Applicability

The high-strength hot-dip galvanized steel sheet of the present invention has excellent coating appearance and coating adhesion, and can be used as a surface-treated steel sheet for reducing the weight and increasing the strength of an automotive body itself. Besides the automotive field, the galvanized steel sheet can be used in a wide range of fields, such as home appliances and building materials, as a surface-treated steel sheet in which a rust resistance has been imparted to the base steel sheet.

## Claims

1. A method for producing a high-strength hot-dip galvanized steel sheet comprising a steel sheet having a chemical composition containing, in % by mass, C: not less than 0.08% and not more than 0.25%, Si: not less than 0.1% and less than 2.0%, Mn: not less than 1.5% and not more than 3.5%, P: 0.02% or less, S: 0.01% or less, Al: 0.10% or less, and N: 0.006% or less, the mass ratio of Si to Mn (Si/Mn) being 0.25 or more, and the balance being Fe and incidental impurities, and a zinc coating layer formed on the surface of the steel sheet with a coating weight of not less than 20 g/m² and not more than 120 g/m² per one surface of the steel sheet, the method comprising subjecting the steel sheet to annealing and hot-dip galvanization in a continuous hot-dip galvanizing facility, wherein the maximum temperature T of the steel sheet in an annealing furnace is 900°C or less, wherein the dew point X (°C) of an atmosphere in the furnace in the steel sheet temperature range of 700°C to T°C is controlled to be not less than a temperature calculated by the following inequality (1), and wherein the atmosphere in the furnace contains hydrogen in an amount of not less than 3.0 vol % and not more than 20.0 vol %, and at least one of SO₂ in an amount of not less than 0.1 vol ppm and not more than 3.0 vol ppm and HCl in an amount of not less than 0.5 vol ppm and not more than 10.0 vol ppm, with the balance of the atmosphere being nitrogen and impurities: Dew point X ≥ (-50 + [Si% by mass] × (T - 600)/30 + [Mn% by mass] × (T - 600)/25) where Si% by mass refers to the mass % of Si in the chemical composition of the steel sheet, and Mn% by mass refers to the mass % of Mn in the chemical composition of the steel sheet.

2. The method for producing a high-strength hot-dip galvanized steel sheet according to claim 1, wherein the steel sheet further contains, in % by mass, at least one group selected from the following groups A to E:
group A: at least one of Ti, Nb, V, and Zr in a total amount of 0.2% or less,
group B: at least one of Mo, Cr, Cu, and Ni in a total amount of 0.01% to 0.5%,
group C: B in an amount of 0.0003% to 0.005%,
group D: at least one of Sb and Sn in a total amount of 0.001% to 0.2%, and
group E: at least one of Ca, Mg and REM in a total amount of 0.0001% to 0.0005%.

3. A high-strength hot-dip galvanized steel sheet comprising: a steel sheet having a chemical composition containing, in % by mass, C: not less than 0.08% and not more than 0.25%, Si: not less than 0.1% and less than 2.0%, Mn: not less than 1.5% and not more than 3.5%, P: 0.02% or less, S: 0.01% or less, Al: 0.10% or less, and N: 0.006% or less, the mass ratio of Si to Mn (Si/Mn) being 0.25 or more, and the balance being Fe and incidental impurities; and a zinc coating layer formed on the surface of the steel sheet with a coating weight of not less than 20 g/m² and not more than 120 g/m² per one surface of the steel sheet, wherein the oxygen content, per one surface of the steel sheet, is not less than 0.030 g/m² and not more than 0.40 g/m² in a surface region of the steel sheet, located just beneath the zinc coating layer and ranging within 100 µm from the surface of the base steel sheet toward the center in the thickness direction, wherein the maximum length of oxides present in the surface region of the steel sheet is 6.0 µm or less, and wherein the number of oxides present in the surface region of the steel sheet and having a length of 1.0 µm or more is 20 or less per 100 µm of the length of the surface region of the steel sheet in the width direction of the steel sheet.

4. The high-strength hot-dip galvanized steel sheet according to claim 3, wherein the steel sheet further contains, in % by mass, at least one group selected from the following groups A to E:
group A: at least one of Ti, Nb, V, and Zr in a total amount of 0.2% or less,
group B: at least one of Mo, Cr, Cu, and Ni in a total amount of 0.01% to 0.5%,
group C: B in an amount of 0.0003% to 0.005%,
group D: at least one of Sb and Sn in a total amount of 0.001% to 0.2%, and
group E: at least one of Ca, Mg, and REM in a total amount of 0.0001% to 0.0005%.
